# EUROPEAN PATENT APPLICATION

(11) **EP 2 063 421 A2**
(43) Date of publication of application: **27.05.2009**
(21) Application number: 08253788.7
(22) Date of filing: 21.11.2008
(51) Int. Cl.: G11B 5/86

(54) **Master carrier for magnetic transfer and magnetic recording medium manufactured using the same**

(30) Priority: 21.11.2007 JP 2007302165
(71) Applicant: FUJIFILM Corporation, Minato-ku Tokyo (JP)
(72) Inventor: Nishida, Yoichi, Odawara-shi Kanagawa (JP); Nishikawa, Masakazu, Odawara-shi Kanagawa (JP); Kubota, Hideyuki, Odawara-shi Kanagawa (JP); Komine, Takashi, Hitachi-shi Ibaraki (JP); Sugita, Ryuji, Hitachi-shi Ibaraki (JP)
(74) Representative: Stevens, Jason Paul

(57) **Abstract**

A magnetic transfer master substrate (20) for transferring magnetic information thereof to a perpendicular recording magnetic recording medium (10) in contact therewith under application of a magnetic field comprises a transfer surface area has a magnetic layer (204, 214) formed thereon in a pattern according to the magnetic information to be transferred to the perpendicular magnetic recording medium and a non-transfer surface area laying below said transfer surface area. The magnetic layer has a perpendicular magnetic anisotropy of an anisotropy energy higher than 4 x 10⁶ erg/cm³.

The invention also extends to a magnetic transfer method for transferring magnetic information from the magnetic transfer master substrate (20) to a perpendicular magnetic recording medium (10).

## Description

The present invention relates to a master information carrier for magnetic transfer of information to a perpendicular magnetic recording medium and a magnetic transfer method by use of the master information carrier.

Perpendicular magnetic recording mediums are known as high density magnetic recording mediums. Such a perpendicular magnetic recording medium has an information recording region comprising narrower tracks. The key factor behind this medium is a tracking servo technology for precisely scanning the narrower tracks by a magnetic head and reproducing signals at a high S/N ratio. In performing the tracking servo, it is necessary that servo information such as tracking servo signals, address information signals, reproducing clock signals, etc. have been recorded on the perpendicular magnetic recording medium at predetermined regular intervals in what is called a pre-format. Pre-formatting techniques are disclosed in, for example, Published Japanese Patent Application Nos. 2000-195048, 2003-203325 and 2007-310943, and US 7218465. In one of the magnetic transfer methods, a magnetic field is applied to a master carrier with a pattern including a magnetic layer corresponding to servo information and a magnetic recording medium in intimate contact to transfer the pattern to the magnetic recording medium from the master carrier. In this prior art magnetic transfer method, when applying a magnetizing field to the master carrier in intimate contact with the magnetic recording medium, a magnetic field is enhanced according to a projection-depression pattern of the master carrier resulting from absorption of a magnetic flux by a patterned magnetic layer of the master carrier according to magnetization. The magnetic recording medium is magnetized in pattern by the pattern-enhanced magnetic field. Against such a background, magnetic materials having high saturation magnetization have been commonly used for the magnetic layer of the master carrier.

Meanwhile, a magnetic layer of the master carrier is made from a soft magnetic material.

The magnetic layer of the master carrier is considerably thin (with a thickness such as several dozen nanometres) and, therefore, generates a demagnetizing field therein when getting a magnetic field for magnetic transfer. As the demagnetizing field increases its intensity, an effective intensity of a magnetic field applied to the magnetic layer declines even though the magnetic layer is made from a material having high saturation magnetization, so that the patterned magnetic layer remains unsaturated. Until now, in order to ensure an assured intensity of a transfer magnetic field, it has been intended to turn up an effective intensity of the applied magnetic field to the magnetic layer through a rise in the intensity of an external magnetic field so that the magnetic layer gains to a saturated condition of magnetization. However, as an increase rate of magnetization of the magnetic layer due to a rise in the intensity of the applied magnetic field is proportional to the intensity of the applied magnetic field, that intention provides a situation equivalent to the situation where a strong magnetic field is virtually applied to a material of low saturation magnetization. The transfer magnetic field is so strong for projections as to provide almost saturated magnetization of the perpendicular magnetic recording medium; however, it is also strong for depressions, and there is only a small difference in the intensity of the transfer magnetic field between the patterns of projections and depressions. If performing the magnetic transfer of servo information to the perpendicular magnetic recording medium in this condition, an inversion of magnetization occurs at depressions of the perpendicular magnetic recording medium which should not be magnetized. This results in the problem that recorded signals deteriorate in quality level. For example, in a magnetic transfer method in which a magnetic transfer master carrier with an isotropic magnetic layer having high saturation magnetization is used, when applying an external magnetic field to the magnetic layer, a demagnetizing field generates in the magnetic layer. In particular, when recording a magnetic signal (a magnetic pattern) having a thin line thickness, it is hard to saturate magnetically the magnetic layer of the master carrier. In such cases, when saturating the magnetic layer by means of a strong external magnetic field, leakage fluxes at depressions are increased, so that it is difficult to provide a large difference in the intensity of transfer magnetic field between the patterns of projections and depressions.

In order to control an occurrence of the problem, it is necessary that, in any situation where a transfer magnetic field is applied, the magnetic layer of the master carrier is saturated on its own with a desired transfer magnetic field and gains a large magnetization value. In particular, when it is possible to make a magnetization value of the magnetic layer of the master carrier sufficiently larger with a transfer magnetic field having a minimum intensity required to magnetize the perpendicular magnetic recording medium, that is desirable from the perspective that a difference in the intensity of the transfer magnetic field between the projections and depressions is made larger.

Thus circumstanced, the use of materials having magnetic anisotropy perpendicular to a surface of a magnetic layer for the magnetic layer is being investigated. The investigation holds forth the possibility that the use of such a material having perpendicular magnetic anisotropy enables to facilitate making a magnetization value of the magnetic layer larger with a transfer magnetic field while controlling an intensity of the transfer magnetic field to be applied to the master carrier to a minimum required intensity. That is, it has been thought that, because the magnetic layer having perpendicular magnetic anisotropy attains saturation magnetization even by use of a weaker external magnetic field, it is possible to easily increase a difference in the intensity of transfer magnetic field between projections and depressions by use of a weaker external magnetic field.

However, even though selecting simply a material having perpendicular magnetic anisotropy for the magnetic layer of the mater carrier, it is impossible to realize a state of spontaneous magnetization or a state of saturation magnetization under a low transfer magnetic field. In consequence, there has occurred the problem of deterioration in quality level of servo signals of the perpendicular magnetic recording medium magnetically transferred from the master carrier. In particular, it is hard to perform favourable recording of magnetic signals having signal line thicknesses less than 80 nm.

It is therefore an object of at least the preferred embodiments of the present invention to provide a master carrier for magnetic transfer which is provided with a magnetic layer having high magnetic anisotropy energy and less influenced by a demagnetizing field caused by a transfer magnetic field and, in consequence, capable of performing favourable magnetic recording of signals having thin line thickness (les than 80 nm), and to provide a magnetic transfer method using the master carrier.

According to a first aspect of the present invention, there is provided a magnetic transfer master substrate carrying magnetic information which is transferred to a perpendicular magnetic recording medium by applying a magnetic field to the magnetic transfer master substrate in intimate contact with the perpendicular magnetic recording medium. The magnetic transfer master substrate comprises a surface including a transfer surface area with a magnetic layer of, preferably, CoPt, formed on the surface in a pattern according to magnetic information to be transferred to the perpendicular magnetic recording medium, and a recessed non-transfer surface area laying below the transfer surface area. The magnetic layer has perpendicular magnetic anisotropy of anisotropy energy higher than 4 x 10⁶ erg/cm³. The anisotropy energy may be preferably in a range of from 5 x 10⁶ erg/cm³ to 1 x 10⁸ erg/cm3, and more preferably in a range of from 7 x 10⁶ erg/cm³ to 3 x 10⁷ erg/cm³.

It is preferred that the magnetic layer has a saturation magnetization higher than 600 emu/cc.

The magnetic transfer master substrate may further comprise an under layer, formed under said magnetic layer, for adjusting an orientation of perpendicular magnetization of the magnetic layer.

According to a second aspect of the present invention, there is provided a magnetic transfer method for transferring magnetic information of a magnetic transfer master substrate carrying the magnetic information to a perpendicular magnetic recording medium. The magnetic transfer method comprises the steps of initially magnetizing the perpendicular magnetic recording medium in a perpendicular direction, putting the magnetic transfer master substrate prepared as described above and the perpendicular magnetic recording medium after initial magnetization in intimate contact with each other, and applying a perpendicular magnetic field in a direction opposite to the direction of the initial magnetization to the magnetic transfer master substrate in intimate contact with the perpendicular magnetic recording medium.

The magnetic transfer master substrate and the magnetic transfer method using the magnetic transfer master substrate provide a solution to the conventional problems known in the art and achieve the foregoing object. The magnetic transfer master substrate provided with a magnetic layer having high magnetic anisotropy energy and less influenced by a demagnetizing field caused by a transfer magnetic field is capable of increasing signal output even in the case where a signal line thickness is less than 80 nm, thereby performing favourable magnetic recording of signals.

The foregoing and other objects and features of the present invention will be clearly understood from the following detailed description when reading with reference to the accompanying drawings in which:
Figure 1 illustrates, in schematic, simplified perspective view, a sequence of process steps of magnetic transfer for transferring magnetic information from a master disc to a slave disc;
Figure 2(A) illustrates, in schematic, simplified cross-sectional view, a master disc according to an embodiment of the present invention;
Figure 2(B) illustrates, in schematic, simplified cross-sectional view, a master disc according to an alternate embodiment of the present invention;
Figures 3(A) and 3(B) illustrate, in schematic, simplified cross-sectional view, a sequence of process steps of manufacturing the master disc;
Figure 4 illustrates, in schematic, simplified plan view, a surface configuration of the master disc;
Figure 5 illustrates, in enlarged cross-sectional view, a slave disc;
Figure 6 illustrates, in schematic, simplified cross-sectional view, a magnetic recording layer for showing a direction of initialized magnetization;
Figure 7 illustrates, in schematic, simplified cross-sectional view, a process step of magnetic transfer;
Figure 8 illustrates, in schematic, simplified side view, a magnetic field application device; and
Figure 9 illustrates, in schematic, simplified cross-sectional view, a magnetic recording layer for showing a direction of transferred magnetization.

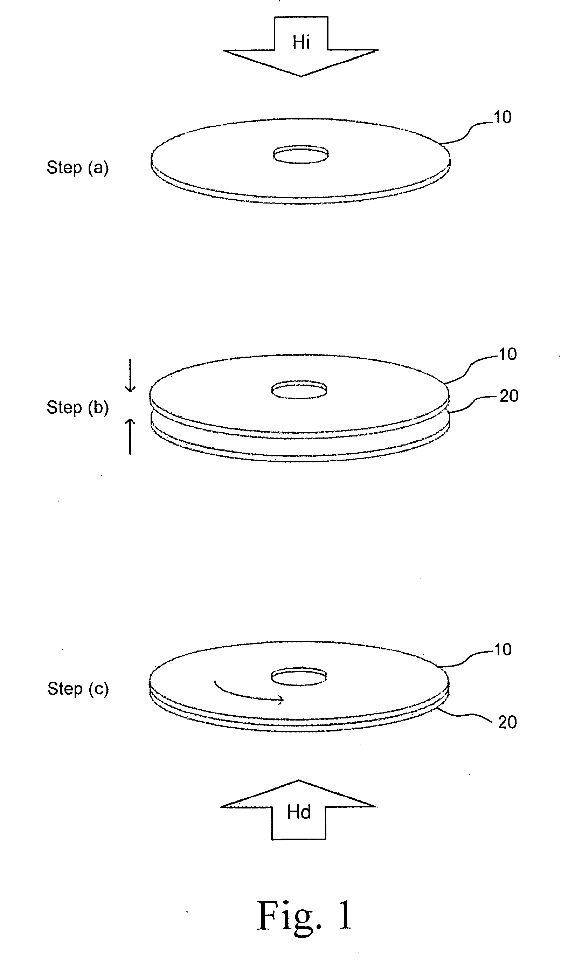

Figure 1 shows the sequence of process steps of a magnetic transfer method for explanation of the magnetic transfer technology for perpendicular magnetic recording. In Figure 1, the reference numerals 10 and 20 denote a slave disc as a magnetic medium for perpendicular magnetic recording (a perpendicular magnetic recording disc) and a disc-shaped master carrier (which is hereinafter referred to as a master disc for simplicity) used for magnetic transfer, respectively. In step (a), a DC magnetic field (Hi) is perpendicularly applied to a planar surface of the slave disc 10 to initialize magnetization of the slave disc 10. In step (b) after the initial magnetization, the slave disc 10 and the master disc 20 are put in intimate contact with each other. Then, in step (c), a transfer magnetic field (Hd), opposite in direction to the magnetic field (Hi) for initial magnetization of the slave disc 10, is perpendicularly applied to the master disc 20 in intimate contact with the slave disc 10 to magnetically transfer information carried by the master disc 20 to the slave disc 10. The magnetic transfer master carrier of the present invention is comparable to the master disc 20 shown in Figure 1.

The following description is directed to the master disc 20 as an example of the magnetic transfer master carrier of the present invention.

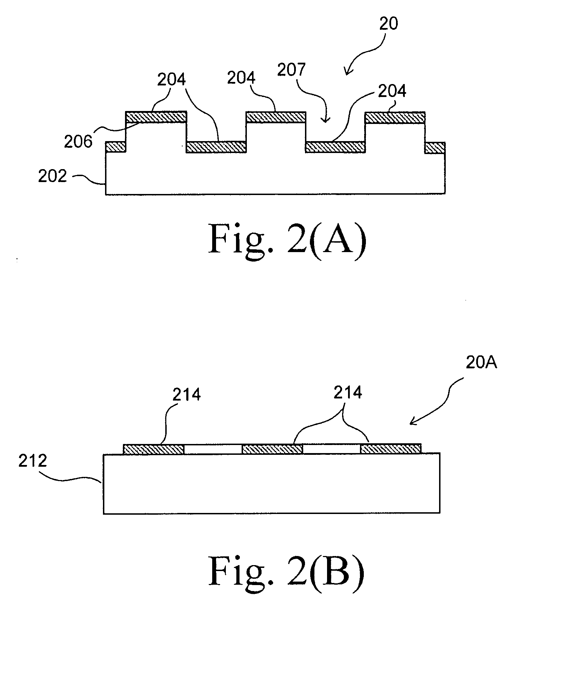

Referring to Figure 2(A) showing the master disc 20 in cross-section, the master disc 20 comprises a rigid base substrate (magnetic transfer master carrier) 202 having a patterned indented upper surface including a plurality of projections 206 and a plurality of depressions 207 and a magnetic layer 204 deposited on the upper surface (surfaces of the projections 206 and the depressions 207). The magnetic layer 204 deposited on surfaces of the depressions 207 is not indispensable, and may or may not be formed depending upon facility in manufacturing. The projections 206 with the magnetic layer 204 deposited thereon, which constitute bits corresponding to transfer signals for reversing initial magnetization of the slave disc, are hereinafter generally referred to as a magnetic transfer area. However, the depressions 207, which are not used to reverse initial magnetization of the slave disc, are hereinafter generally referred to as a non-magnetic transfer area.

Figure 2(B) shows an alternative form of the master disc 20. The alternative master disc 20A has a magnetic layer 214 deposited in a pattern of bits on a rigid base substrate 212. The patterned magnetic layer 214 is used as a magnetic transfer area. Surface portions that are not covered by a magnetic layer constitute a non-magnetic transfer area.

Each of the base substrates 202 and 212 may be made from a material selected from a group consisting of glass, a synthetic resin such as polycarbonate, a metal such as nickel or aluminium, silicone, carbon, etc. which are well known in the art.

The magnetic layer 204, 214 has a perpendicular magnetic anisotropy of anisotropy energy (Ku) at least higher than 4 x 10⁶ erg/cm³. The anisotropy energy (Ku) may be preferably in a range of from 5 x 10⁶ erg/cm³ to 1 x 10⁸ erg/cm³ and more preferably in a range of from 7 x 10⁶ erg/cm³ to 3 x 10⁷ erg/cm³. If the magnetic anisotropy energy (Ku) is too high, it is difficult to provide perpendicularly oriented magnetic layer. On the other hand, if the magnetic anisotropy energy (Ku) is too low, the magnetic layer imposes restrictions on materials available therefore.

The anisotropy energy (Ku) may be measured by use of any anisotropy torque meter well known in the art. As regards the magnetic anisotropy energy (Ku), the state where a magnetic layer has "perpendicular magnetic anisotropy" is identified as follows. A ratio of magnetization value between an in-plane magnetization curve (Min) and a perpendicular magnetization curve (Mpe) is greater than 1 (one) in a hysteresis curve after demagnetizing field compensation. The magnetization curves are obtained by applying a magnetic field to a sample of the magnetic layer of the master carrier in an in-plane direction and in a perpendicular direction, respectively, by use of a vibrating-sample magnetometer. Then, magnetization values (Min) and (Mpe) are worked out in connection with an in-plane magnetization curve and a perpendicular magnetization curve obtained by applying an external magnetic field same in intensity as a recording magnetic field to the sample based on the magnetization curves.

It is preferred that the magnetic layer 204, 214 has saturation magnetization (Ms) higher than 600 emu/cc. If the saturation magnetization (Ms) is less than 600 emu/cc, the magnetic layer 204, 214 is hard to ensure a difference in the intensity of transfer magnetic field between the projections and the depressions even though having perpendicular magnetic anisotropy and saturated in magnetization of the magnetic layer 204, 214 and is possibly incapable of providing a desired magnetic transfer property consequently. That is, a difference in the intensity of transfer magnetic field between the projections and the depressions is increased by strengthening the saturation magnetization of the magnetic layer 204, 214.

It is further preferred that the magnetic layer 204, 214 has a nucleation magnetic field (Hn) of a positive value (Hn > 0). If the nucleation magnetic field (Hn) is not of a positive value (Hn ≦ 0), a strong magnetic field grows up from the magnetic layer 204, 214 even after a removal of the transfer magnetic field (Hd) after completion of magnetic transfer, over-writing occurs and, in consequence, it is not possible to record desired signals. It is also preferred that the magnetic layer 204, 214 has a nucleation magnetic field (Hn) weaker than the applied magnetic field, i.e. the transfer magnetic field (Hd). When the magnetic layer 204, 214 has a nucleation magnetic field (Hn) weaker than the transfer magnetic field (Hd), the saturated magnetization (Ms) is effectively utilized. The saturation magnetization (Ms) and the nucleation magnetic field (Hn) of the magnetic layer 204, 214 may be measured by use of any vibrating-sample magnetometers well known in the art. The saturation magnetization (Ms) can be determined by finding a value of saturation magnetization (emu/cc) from a magnetization curve obtained by use of the magnetometer and then dividing the value of saturation magnetization (emu/cc) by the volume (cc) of the magnetic layer 204, 214. The nucleation magnetic field (Hn) can be found from the magnetization curve. It is preferred that the magnetic layer 204, 214 has a small value of residual magnetization (Mr). If the residual magnetization (Mr) outgrows a certain value, a magnetic field generates from the master disc even after a removal of the transfer magnetic field, so that unnecessary magnetic transfer is caused in separating the master disc and the slave disc from each other and grows up and leads to noise signals. The residual magnetization (Mr) is less than, preferably, 80 % of the value of saturated magnetization (Ms), and more specifically less than 480 emu/cc. The magnetic layer 204, 214 having an excessive value of magnetic coercive force is hard to be magnetized with an applied transfer magnetic field. Application of a strong transfer magnetic field intensifies a magnetic field of the magnetic layer of the non-transfer area (depressions). Accordingly, it is preferred that the magnetic layer 204, 214 of the master disc has magnetic coercive force (Hc) weaker than that of the perpendicular magnetic recording medium, more specifically, preferably less than 6000 Oe and more preferably less than 4000 Oe. The material of the magnetic layer 204, 214 of the master disc is not particularly bounded if it satisfies the above particulars. There are various kinds of materials available for the magnetic layer 204, 214, e.g., an alloy or a compound comprising at least one of ferromagnetic metals such as Fe, Co and Ni and at least one of nonmagnetic materials such as Cr, Pt, Ru, Pd, Si, Ti, B, Ta and O. A specifically preferred material is an alloy (CoPt) comprising Co and Pt.

The master disc 20 is provided with a protective overcoat layer for the purpose of improving frictional characteristics and antiweatherability. It is preferred to use for the protective overcoat layer a hard carbon film of, e.g., inorganic carbon or diamond-like carbon, formed by sputtering. The hard protective later may be covered by a general type of lubricant overcoat layer made from a fluorocarbon resin such as a perfluoropolyether (PFPE) resin.

Generally, the master disc provided with these protective and lubricant overcoat layers is used for magnetic transfer to a plurality of slave discs. In this instance, because the hard protective layer has micro pin holes and is covered by the lubricant topcoat layer at a comparatively low coverage, one of the problems that the master disc conventionally encounters is that the master disc is permeated with moisture through the micro pin holes of the protective layer during execution of magnetic transfer to the plurality of slave discs and, in consequence, produces an oxide of the magnetic layer on its surface. The oxide partially distends the magnetic layer to form concave scars which possibly cause physical surface defects of the slave discs. In particular, in the case of a master disc having a FeCo magnetic layer, the problem occurring with the master disc is that corrosion and oxidization of the metallic elements, in particular of Fe, of the magnetic layer are selectively caused. By contrast, the master disc having the magnetic layer 204, 214 made from Co and Pt which are lower in ionization tendency than Fe is extensively improved in that problem.

The magnetic layer 204, 214 of the master disc may be formed by sputtering. In the case of the magnetic layer 204, 214 made from Co and Pt, the composition of the magnetic later is principally controlled with sputtering pressure and Pt density used during formation of the magnetic layer 204, 214. When using lower sputtering pressure, it is realized to increase magnetic anisotropy energy (Ku). The sputtering pressure is preferably in a range of from 0.2 Pa to 50 Pa and, more preferably in a range of from 0.2 Pa to 10 Pa. If the sputtering pressure is lower than 0.2 Pa, the sputtering falls into a difficulty in discharging. The Pt density is preferably in a range of from 5 atomic % to 30 atomic % and, more preferably in a range of from 10 atomic % to 20 atomic %.

The master disc 20 may be provided with an under layer between the base substrate 202, 212 and the magnetic layer 204, 214 for facility of adjusting the perpendicular orientation, the magnetic anisotropy energy (Ku), the saturation magnetization (Ms) and the nucleation magnetic field (Hn) of the magnetic layer 204, 214. There are various kinds of materials available for the under layer, e.g., metals, alloys and compounds each of which contains at least one of Pt, Ru, Co, Cr, Ni, W, Ta, Al, P, Si and Ti. In particular, the under layer is preferred to be made from one selected from a platinum group of metals consisting of Pt and Pr or one of platinum alloys. The under layer may be o a single-layered type or a multi-layered type and has a thickness preferably in a range of from 1 nm to 30 nm and more preferably in a range of from 5 nm to 20 nm. If the under layer has a thickness beyond the upper limit of 30 nm, the magnetic layer located on a pattern of projections of the master disc 20 deteriorates in configuration and, in consequence, causes deterioration in the distribution of a transfer magnetic field which leads to deterioration in the quality level of recording signals. On the other hand, if the under layer has a thickness beyond the lower limit of 1 nm, there occurs the case where the magnetic layer 204, 214 is incapable of providing perpendicularly oriented magnetization or the case where the magnetic layer 204, 214 is uncontrollable in the magnetic anisotropy energy, the saturation magnetization and the nucleation magnetic field. Further, when the under layer has a thickness greater than 20 nm, it is capable of controlling deterioration in pattern configuration of the projections of the magnetic layer, so as thereby to extensively improve the magnetic transfer property.

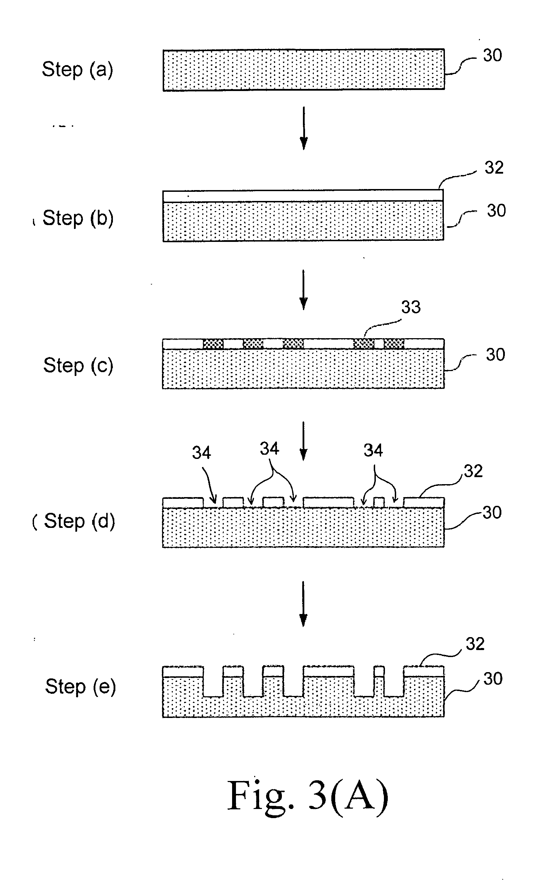

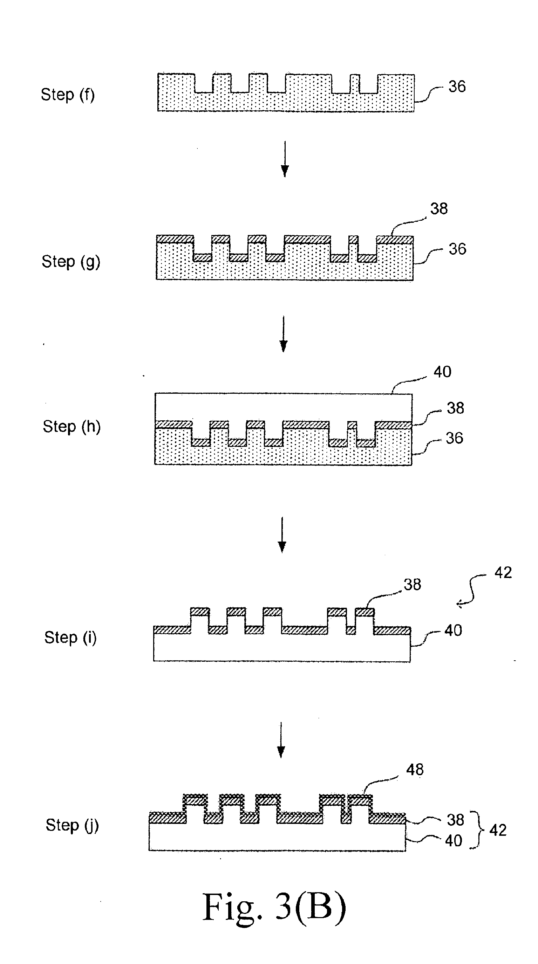

Figures 3(A) and 3(B) illustrate, in schematic, simplified cross-sectional view, a sequence of process steps according to an illustrative embodiment of the invention for manufacturing the master disc 20. As shown, a non-magnetic base substrate 30 having a smooth planar surface is prepared in the form of a silicon wafer in step (a), and a desirably thick layer of a conventional electron beam resist (which is hereinafter referred to as a resist layer) 32 is formed on the planar surface of the base substrate 30 by, for example, spin coating and then subjected to a prebaking process in step (b). Subsequently, a pattern exposure is made on the resist layer 32 by a conventional electron beam photolithographic processing technique to depict a servo pattern 33, i.e., a magnetic transfer pattern, to be formed in the surface of the slave disc 10 in step (c). More specifically, the pattern exposure is performed by irradiating an electron beam modulated correspondingly to servo signals onto the resist layer 32 of the base substrate 30 put on a precise rotating stage or an X-Y stage of a conventional electron beam exposure equipment (not shown) such that a servo pattern 33 representing servo signals which is depicted in leading portions associated with individual concentric tracks of the individual sectors so as to linearly extend in a radial direction from a rotational axis of the base substrate 30.

Then, in step (d), the exposed resist layer 32 is developed to remove exposed portions thereof so as thereby to form a projection-patterned resist layer 32, in the negative pattern of the servo pattern 33, to a desired thickness on the base substrate 30. The projection-patterned resist layer 32 is used as a mask in a subsequent etching process step. As is well known in the art, when using a positive resist material for the resist layer 32, the pattern of projections is formed identically with the servo pattern 33. The projection-patterned resist layer 32 is then subjected to a post-baking process step for improvement of contact strength between the base substrate 30 and the projection-patterned resist layer 32. In subsequent step (e), the base substrate 30 is etched through the projection-patterned resist layer 32 as an etching mask to form a opening-patterned surface including openings 34 having predetermined uniform depths by use of an anisotropy etching technique suitable for facilitating minimization of an undercut. In this instance, it is preferred to employ reactive ion etching in the anisotropy etching process. Subsequently in step (f), the projection-patterned resin layer 32 is removed from the base substrate 30 to turn the base substrate 30 into an original disc 36 having a depression-patterned surface, in a pattern identical with the servo pattern 33 to be transferred to a slave disc or, seen from another standpoint, a projection-patterned surface, in a negative pattern of the servo pattern 33 to be transferred to a slave disc.

According to next step (g), an electrical conductive layer 38 is deposited to a uniform thickness on projections and depressions of the upper surface of the original disc 36. Formation of the electrical conductive layer 38 may be performed by use of any suitable metal film forming technique such as physical vapour deposition (PVD), chemical vapour deposition (CVD), sputtering, ion-plating, etc. The electrical conductive layer 38 brings about the effect of facilitating electrodeposition of a metal uniform in thickness in a subsequent step when it is single-layered. It is preferred to form the electrical conductive layer 38 from a material containing Ni in a major proportion in terms of easy formation and hardness. The electrical conductive layer 38 is not particularly bounded by thickness and is typically a few dozen nanometres in thickness.

In following step (h), a metal (Ni in this embodiment) is deposited on the original disc 36 with the electrical conductive layer 38 formed thereon by electrical deposition to form a metal plate 40 (which is comparable to the base substrate 202 in Figure 2(A)) to a desired thickness. The metal plate 40 thus formed has a projection-patterned surface which is a negative pattern of the original disc 36, or identical with the servo pattern 33 as seen from another standpoint, to be transferred to a slave disc. The electrical deposition is performed by conducting electricity between the original disc 36 as an anode and a cathode in an electrolytic solution of Ni. In this instance, concentration and pH of the electrolytic solution of Ni and the way of conducting electricity are so determined that the metal deposition is performed under optimum conditions suitable for formation of the metal plate 40 without distortion. The original disc 36 with the metal plate 40 laminated thereon is pulled out of the electrolytic solution and then soaked in deionized water in a peeling bath to peel off the metal plate 40 from the original disc 36 in step (i). The metal plate 40 with the electrical conductive layer 38 is used as a master substrate 42 having a projection-patterned surface which is a reversed pattern of the recess-patterned original disc 36 but identical with the servo pattern 33 to be transferred to the slave disc.

Lastly, in step (j), a magnetic layer 48 is formed on the upper surface including projections and depressions of the master substrate 42 by, for example, sputtering. The magnetic layer 48 is not particularly bounded by material and is preferably made from CoPt. The thickness of the magnetic layer 48 is preferably in a range of from 5 nm to 200 nm, more preferably in a range of from 10 nm to 100 nm and most preferably in a range of from 15 nm to 50 nm. In this instance, the under layer may be formed from, e.g. Ta, before formation of the magnetic layer 48.

Further, the master substrate 42 is punched out to a desired disc size to provide it as the master disc 20 having a projection-patterned surface with the magnetic layer 48 (which is comparable with the magnetic layer 204 of the master disc 20 in Figure 2(A)) formed thereon.

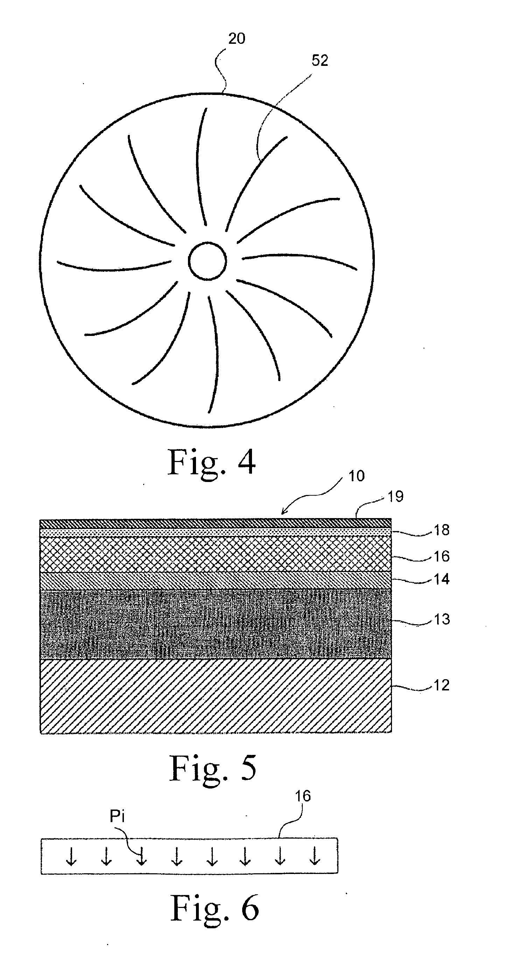

Figure 4 illustrates, in schematic, simplified plan view, the master disc 20 having a magnetic layer 48 (see step (j) in Figure 3(B)) patterned correspondingly to a magnetic transfer pattern, e.g., a servo pattern 52. Since the patterned magnetic layer 48 easily gets scratched, the master substrate 42 may be provided with a protective layer made from a diamond-like carbon and, as appropriate, a lubricant overcoat layer over the magnetic layer 48. The protective layer prevents the magnetic layer 48 from being scratched and disabled when the master disc 20 is put into intimate contact with the slave disc 10. The lubricant overcoat layer prevents the patterned magnetic layer 48 from getting scratched due to friction generated during intimate contact with the slave disc 10, thereby increasing durability of the master disc 20. Specifically, it is preferred to provide a carbon layer having a thickness in a range of from 2 nm to 30 nm as the protective layer and additionally a lubricant overcoat layer over the protective layer. It is further preferred to provide a layer, made from, e.g., Si, between the patterned magnetic layer 48 and the protective layer for the purpose of enhancement of adhesiveness between them.

Now, a description is made to explain the slave disc (the perpendicular magnetic recording medium 10 shown in Figure 1) with reference to Figure 5.

Referring to Figure 5 illustrating, in cross-sectional view, a high density hard disc provided with a magnetic layer on either one or both of smooth planar surfaces thereof as an example of the slave disc 10, the slave disc 10 comprises a non-magnetic base substrate 12, typically made from a metal, e.g., aluminium, or glass, having sequentially formed thereon a soft magnetic under layer (SUL) 13, a non-magnetic interlayer 14, a perpendicular magnetic recording layer (which is hereinafter referred simply to as a magnetic layer) 16, a protective layer 18 and a lubricant overcoat layer 19. The soft magnetic under layer 13 is typically made from a soft magnetic material selected from the group consisting of CoZrNb, FeTaC, FeZrN, FeSi alloy, FeAl alloy; FeNi alloy such as Permalloy, FeCo alloy such as Parmenjul, etc. and has a thickness preferably in a range of from 20 nm to 2000 nm, and more preferably in a range of from 40 nm to 400 nm. The soft magnetic under layer 13 has magnetic anisotropy oriented toward outwardly from the centre of the slave disc 10 in all directions or in a radial pattern. The soft magnetic under layer 13 has the beneficial effect of stabilizing a state of the perpendicular magnetization of the magnetic layer 16 and, in consequence, improving sensitivity of the magnetic layer 16 upon reading/writing.

The non-magnetic interlayer 14, which has the effect of enhancing perpendicular magnetic anisotropy of the magnetic layer 16 to be formed later, is typically made from a soft magnetic material selected from the group consisting of Ti, Cr, CrTi, CoCr, CrTa, CrMo, NiAl, Ru, Pd, Ta, Pt, etc. The non-magnetic interlayer 14 is formed to a thickness preferably in a range of from 10 nm to 150 nm, and more preferably in a range of from 20 nm to 80 nm, by e.g. sputtering.

The magnetic layer 16 comprises a perpendicularly magnetized film, i.e. a magnetic film having an easy axis of magnetization therein oriented perpendicularly to the base substrate 12, which records information therein and is made from preferably a material selected from the group consisting of Co, a Co-based alloy such as CoPtCr, CoCr, CoPtCrTa, CoPtCrNbTa, CoCrB, CoNi, etc., Co alloy-SiO₂, Co alloy-TiO₂, Fe or a Fe-based alloy such as FeCo, FePt, FeCoNi, etc. These materials have high magnetic flux densities and are capable of providing the magnetic layer 16 with perpendicular magnetic anisotropy through adjustment of conditions of the formation of and the composition of the magnetic layer 16. The magnetic layer 16 is formed to a thickness preferably in a range of from 10 nm to 500 nm, and more preferably in a range of from 20 nm to 200 nm, by e.g., sputtering.

According to the present embodiment, the slave disc 10 is fabricated as follows. First of all, a first soft magnetic layer of CoZrNb is formed to a thickness of 80 nm as a layer on a disc-shaped glass substrate having an outer diameter of 65 mm as the base substrate 12 put in a sputtering chamber of a sputtering equipment depressurized to 1.33 x 10⁻⁵ Pa and filled with an Ar gas by sputtering CoZrNb as a target material while keeping the glass substrate at a room temperature. Subsequently, a Ru interlayer is additionally formed to a thickness of 0.8 nm over the CoZrNb first soft magnetic layer on the glass substrate by sputtering Ru as a target material in the sputtering chamber. Further, a CoZrNb second soft magnetic layer is formed to a thickness of 80 nm over the Ru layer by sputtering CoZrNb as a target material under the same conditions. While applying a magnetic field stronger than 50 Oe to the soft magnetic under layer 13, in the form of three-ply layer comprising the CoZrNb first soft magnetic layer, the Ru interlayer and the CoZrNb second soft magnetic layer, in a radial direction, the soft magnetic under layer 13 is heated to 150°C and cooled to a room temperature, e.g., around 20°C to complete the soft magnetic under layer 13.

A Ru non-magnetic interlayer 14 is formed to a thickness of 60 nm over the soft magnetic under layer 13 by discharging and sputtering Ru as a target material in the sputtering chamber while keeping the glass substrate at a room temperature.

Thereafter, a magnetic layer 16 having a CoZrNb-SiO₂ granular structure is formed to a thickness of 25 nm over the non-magnetic interlayer 14 by discharging and sputtering CoZrNb as a target material in the sputtering chamber filled with an Ar gas while keeping the glass substrate at a room temperature. In this way, the slave disc 10 with the soft magnetic under layer 13, the non-magnetic interlayer 14 and the magnetic layer 16 sequentially formed on the base substrate 12 is fabricated as a magnetic recording medium which is subjected to magnetic transfer.

The magnetic transfer process of the present invention includes at least the steps of initial initialization, putting the master disc and the slave disc in intimate contact and magnetic transfer and may include other steps, as appropriate.

The initial magnetization is the step of initially magnetizing the perpendicular magnetic recording medium in a perpendicular direction. The term "perpendicular direction" as used herein shall mean and refer to a direction at an angle within ±10° with respect to a vertical direction to a surface of the perpendicular magnetic recording medium. The perpendicular direction is preferably an angle within ±5° of a vertical direction with respect to a surface of the perpendicular magnetic recording medium.

Referring to Figure 6, the magnetic recording layer is schematically illustrated to show a direction of initialized magnetization. As illustrated in Figure 1, initialization of magnetization (DC magnetization) of the slave disc 10 (step (a)) is performed by use of a magnetic field application device (which will be described later) capable of generating and applying a initializing DC magnetic field Hi, more specifically an initializing DC magnetic field Hi stronger than magnetic coercive force Hc of the slave disc 10, perpendicularly to a disc surface of the slave disc 10. As shown in Figure 6, through the process step of initialization of DC magnetization, the magnetic layer 16 of the slave disc 10 is initially magnetized in a direction perpendicular to the disc surface of the slave disc 10 indicated by an arrow Pi in Figure 6. The initial magnetization may be performed while rotating the slave disc 10 relatively to the magnetic field application device.

The slave disc 10 after initial magnetization and the master disc 20 are brought into intimate contact with each other (see step (b) in Figure 1). The projection-patterned surface of the master disc 20 is pressed down on the magnetic layer 16 of the slave disc 10 at a specified pressure. Prior to putting the master disc 20 and the slave disc 10 in contact, a burnishing process is introduced as appropriate to remove fine projections and adhesive dust from the surface of the slave disc 10 by use of a glide head or a burnisher.

The magnetic transfer is the step of transferring magnetic information of the master disc to the perpendicular magnetic recording medium in minute contact with the master disc by applying a perpendicular magnetic field in a direction opposite to the initial magnetization. The term "a direction opposite to an initial magnetization" as used herein shall include a direction inclined at an angle within ±5° with respect to the direction of initial magnetization.

In the magnetic transfer (step (c) in Figure 1), the magnetic field application device is caused to generate a transfer magnetic field (Hd) in the opposite direction to the initializing magnetic field (Hi) so that a magnetic flux permeates through both slave disc 10 and master disc 20, thereby performing the magnetic transfer. In this instance, the transfer magnetic field (Hd) is set to approximately the same intensity as the coercive force (Hc) of the material of the magnetic layer 16 of the slave disc 10.

The magnetic transfer is performed by causing the magnetic field application device to generate and apply the transfer magnetic field (Hd) to the master disc 20 in intimate contact with the slave disc 10 while rotating them so as thereby to magnetically transfer information of the magnetic pattern, e.g., a servo pattern, of the master disc 20 to the magnetic layer 16 of the slave disc 10. Of course, the magnetic transfer may be performed by rotating the magnetic field application device relatively to the slave disc 10 and the master disc 20 in intimate contact with each other while keeping them stationary. In the case of a double-sided slave disc with the magnetic layer on each of the opposite surfaces thereof, it is possible to perform magnetic transfer on the opposite surfaces of the slave disc sandwiched between two master discs.

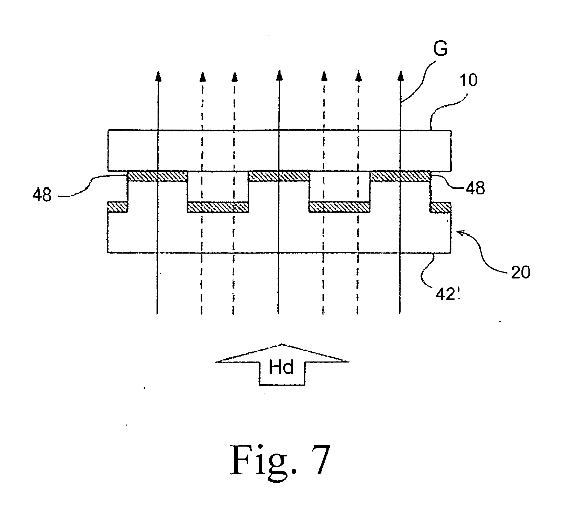

Referring to Figure 7 illustrating, in schematic, simplified cross-sectional view, a process step for magnetic transfer between the master disc 20 and the slave disc 10, when applying the transfer magnetic field (Hd) to the master disc 20 in intimate contact with the slave disc 10, the magnetic flux (G) acts strongly on projected area where the projection-patterned magnetic layer 48 of the master disc 20 in intimate contact with the magnetic layer 16 of the slave disc 10, so that the magnetization of the projection-patterned magnetic layer 48 of the master disc 20 is unidirectionally aligned with the transfer magnetic field (Hd), thereby transferring the magnetic information to the magnetic layer 16 of the slave disc 10 from the master disc 20. On the other hand, the magnetic flux (G) acting on the depressed area of the master disc 20 is too weak, as compared with that acting on the projected area, to change the orientation of magnetization of the magnetic layer 16 of the slave disc 10, so that the magnetic layer 16 of the slave disc 10 remains in the initial magnetization.

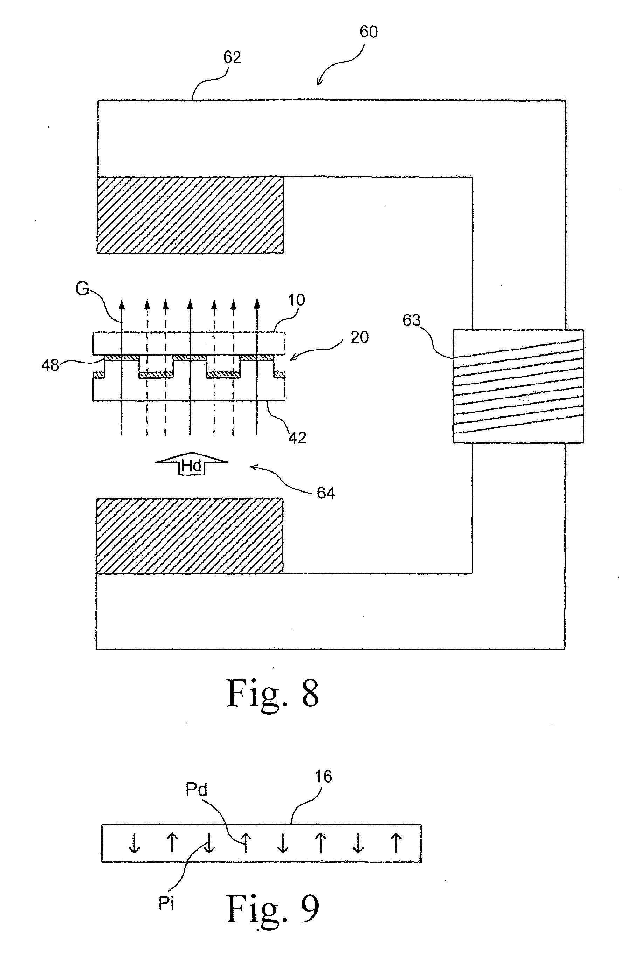

Figure 8 illustrates, in schematic, simplified cross-sectional view, a magnetic field application device 60 of a magnetic transfer machine for implementing the magnetic transfer method of the present invention by way of example. The magnetic field application device 60 includes an electromagnet unit comprising a generally U-shaped core 62 and a coil 63 wound around the core 62. The magnetic field application device 60 is so configured that, when passing an electric current through the coil 63, a magnetic field is generated perpendicularly to the slave disc 10 and the master disc 20 in intimate contact within a gap 64. The direction of the magnetic field depends upon a direction of an electric current flow passing through the coil 63. Therefore, the magnetic transfer machine is capable of initialization of magnetization of the slave disc 10 as well as performing magnetic transfer to the slave disc 10.

When performing magnetic transfer to the slave disc 10 with its magnetization initialized, the magnetic field application device 60 is energized by passing an electric current through the coil 63 in a direction opposite to a direction of the electric current applied at the initialization of magnetization to generate a transfer magnetic field in an opposite direction to the direction of initial magnetization. Because the magnetic transfer takes place by applying a transfer magnetic field (Hd) to the master disc 20 in intimate contact with the slave disc 10 during rotation of the slave disc 10 and the master disc 20 in contact, the magnetic transfer machine is provided with a drive unit (not shown) for causing rotation of the slave disc 10 and the master disc 20 in contact. Alternatively, the magnetic transfer machine may be provided with a drive unit for causing rotation of the magnetic field application device 60 relative to the slave disc 10 and the master disc 20 which remain stationary.

Figure 9 illustrates, in schematic, simplified cross-sectional view, the slave disc 10 after magnetic transfer. In this instance, the transfer magnetic field (Hd) is preferably in a range of from 60 % to 130 %, and more preferably in a range of from 70 % to 120 %, of the magnetic coercive force (Hc) of the magnetic layer 16 of the slave disc 10. As a result, the magnetic information representing, e.g. a servo pattern, is recorded in the form of magnetization oriented oppositely to the initial magnetization Pi in the magnetic layer 16 of the slave disc 10. Any other steps may be employed without limitation according to intended use of the perpendicular magnetic recording medium.

The master disc 20 may have a negative pattern comprising recesses in place of the positive pattern provided in the sequential process step (j) shown in Figure 3(B). This is because the same magnetic information is transferred to the magnetic layer 16 of the slave disc 10 by reversing the direction of the magnetic field between initialization of magnetization and magnetic transfer. Further, the magnetic field application device 60 may be provided with a permanent magnet in place of the electromagnet unit.

Perpendicular magnetic recording mediums manufactured by the magnetic transfer method of the present invention are utilized with magnetic recording/reproducing equipments such as a hard disc recording/reproducing device and are capable of providing a favourable characteristic of high density recording/reproducing with high servo accuracy.

For evaluation of the magnetic transfer master carrier of the present invention, master disc of practical examples E-I to E-V and comparative examples C-I to C-III were prepared and subjected to measurements of the following attributes.

### Example E-I

### (Preparation of Master Disc)

An electron beam resist coating layer was formed to a thickness of 100 nm on an 8-inch silicon wafer (base substrate) by spin coating. The resist layer was exposed to an electron beam by use of a rotary electron beam lithographic equipment and then developed to provide a patterned resist layer on the silicon wafer. The silicon wafer was processed by reactive ion beam etching using the patterned resist layer as a mask so as thereby to form a pattern of recesses in the silicon wafer and then washed to remove the patterned resist layer and dried. The recess-patterned silicon wafer was used as an original disc for preparing a master carrier 20.

### (Fabrication of Master Carrier Intermediate)

A Ni electrical conductive layer was formed to a thickness of 20 nm on the original disc by sputtering. Then a Ni film was formed to a thickness of 200 µm by electrolytic plating the original disc with the Ni electrical conductive layer formed thereon dipped in an electroplating bath of Ni sulfamate. Thereafter, the Ni film was peeled apart from the original disc and rinsed, as a master carrier intermediate.

### (Formation of Magnetic Layer for Magnetic Transfer)

A Ta under layer was formed to a thickness of 10 nm on projections of the Ni master carrier intermediate in a sputtering chamber with an Ar gas filled therein under such conditions as a deposition gas pressure of 0.3 Pa, a distance of 200 mm between the Ni master carrier intermediate and a Ta target, and a DC power of 1000 W. Thereafter, a CoPt (Co: 80 atomic %; Pt: 20 atomic %) film was formed to a thickness of 20 nm on the Ni master carrier intermediate in an Ar gas atmosphere under such conditions as a deposition gas pressure of 0.3 Pa, a distance of 200 mm between the Ni master carrier intermediate and a CoPt target, and a DC power of 1000 W. In this way, the master carrier 20 was prepared. The magnetic layer of the master carrier had a magnetic anisotropy energy of 8.6 x 10⁶ erg/cm³ and a saturation magnetization of 1,250 emu/cc.

In this instance, the master carrier of Example E-I was provided with a projection-depression pattern so formed such that, when magnetic signals are magnetically transferred to the perpendicular magnetic recording medium, signal lines have desired thicknesses such as, e.g., 60 nm, 70 nm, 80 nm, 90 nm, 100 nm and 120 nm. Specifically, a disc-shaped master carrier having the following projection-depression pattern was prepared. Line patterns such as gradually thickening outwardly from the centre portion thereof were formed so that projection-depression patterns are arranged at regular intervals twice as long as an intended signal line thickness. In this case, the signal line thickness was 50 nm at an innermost circuit and 150 nm at the outermost circuit. The number of line patterns comprised 100 lines in each sector of 150 sectors arranged at regular intervals in a circumferential direction.

### (Fabrication of Perpendicular Magnetic Recoding Medium)

A perpendicular magnetic recording medium was prepared by forming a soft magnetic under layer, first and second non-magnetic orientation layers, a magnetic recording layer and a protective layer on a 2.5 inch glass disc substrate having a diameter in this order by sputtering. Further, a lubricant layer was additionally formed over the protective layer by dipping. The soft magnetic under layer was formed to a thickness of 100 nm by causing discharge between the glass disc substrate and CoZrNb as a target material set opposite each other in an argon (Ar) gas atmosphere under a pressure of 0.6 Pa at DC 1500 W. The first non-magnetic orientation layer was formed as a seed layer to a thickness of 5 nm by causing discharge between the glass disc substrate and Ti as a target material set opposite each other in an argon (Ar) gas atmosphere under a pressure of 0.5 Pa at DC 1000 W. Further, the second non-magnetic orientation layer was formed to a thickness of 6 nm by causing discharge between the glass disc substrate and Ru as a target material set opposite each other in an argon (Ar) gas atmosphere under a pressure of 0.8 Pa at DC 900 W. The magnetic recording layer was formed to a thickness of 18 nm by causing discharge between the glass disc substrate and CoCrPt as a target material set opposite each other in an argon (Ar) gas atmosphere containing 0.06 % of O₂ under a pressure of 14 Pa at DC 290 W. Finally, the protective layer was formed to a thickness of 4 nm by causing discharge between the glass disc substrate and C as a target material set opposite each other in an argon (Ar) gas atmosphere under a pressure of 0.5 Pa at DC 1000 W. A lubricant layer was finally formed to a thickness of 2 nm by dipping the glass disc substrate in a solution of PFPE. The perpendicular magnetic recording medium was adjusted to have a value of magnetic coercive force of 334 kA/m (4200 Oe). In this way, the perpendicular magnetic recording medium was completed as a slave disc.

### (Magnetic Transfer)

The perpendicular magnetic recording medium thus prepared was initialized in magnetization by application of a magnetic field having a field intensity of 10000 Oe. Magnetic transfer was performed by applying a magnetic field having a field intensity of 4200 Oe to the master disc and the slave disc prepared as described above were put in intimate contact with each other at a pressure of 0.7 MPa.

### Example E-II

A master carrier of example E-II was prepared by the same way as Example E-I, except that a CoPt (Co: 70 atomic %; Pt: 30 atomic %) film was formed in place of the CoPt (Co: 80 atomic %; Pt: 20 atomic %) film. The magnetic layer of the master carrier had a magnetic anisotropy energy of 1.4 x 10⁷ erg/cm³ and a saturation magnetization of 1,120 emu/cc.

### Example E-III

A master carrier of example E-III was prepared by the same way as Example E-I, except that a CoPt (Co: 88 atomic %; Pt: 12 atomic %) film was formed in place of the CoPt (Co: 80 atomic %; Pt: 20 atomic %) film. The magnetic layer of the master carrier had a magnetic anisotropy energy of 5.2 x 10⁶ erg/cm³ and a saturation magnetization of 1,260 emu/cc.

### Example E-IV

A master carrier of example E-IV was prepared by the same way as Example E-I, except that a Ta under layer and a magnetic layer were formed in an argon (Ar) gas atmosphere under a deposition pressure of 3.0 Pa. The magnetic layer of the master carrier had a magnetic anisotropy energy of 7.9 x 10⁶ erg/cm³ and a saturation magnetization of 930 emu/cc.

### Example E-V

A master carrier of example E-V was prepared by the same way as Example E-I, except that a Ta under layer and a magnetic layer were formed in an argon (Ar) gas atmosphere under a deposition pressure of 10.0 Pa. The magnetic layer of the master carrier had a magnetic anisotropy energy of 5.8 x 106 erg/cm3 and a saturation magnetization of 540 emu/cc.

### Comparative Example C-I

A master carrier of comparative example C-I was prepared by the same way as Example E-I, except that a CoPt (Co: 90 atomic %; Pt: 10 atomic %) film was formed in place of the CoPt (Co: 80 atomic %; Pt: 20 atomic %) film. The magnetic layer of the master carrier had a magnetic anisotropy energy of 3.2 x 10⁶ erg/cm³ and a saturation magnetization of 1300 emu/cc.

### Comparative Example C-II

A master carrier of comparative example C-II was prepared by the same way as Example E-I, except that a Ta under layer was not formed. The magnetic layer of the master carrier had a magnetic anisotropy energy of 5 x 10⁶ erg/cm³ and a saturation magnetization of 1400 emu/cc.

### Comparative Example C-III

A master carrier of comparative example C-III was prepared by the same way as Example E-I, except that, in addition to no deposition of a Ta under layer, a FeCo (Fe: 70 atomic %; Co: 30 atomic %) film was formed to 20 nm in place of the CoPt (Co: 80 atomic %; Pt: 20 atomic %) film under such conditions as a deposition gas pressure of 0.5 Pa, a distance of 200 mm between the Ni master carrier intermediate and a Ta target, and a DC power of 1500W. The magnetic layer of the master carrier had a magnetic anisotropy energy of 4.8 x 10³ erg/cm³ and a saturation magnetization of 1800 emu/cc.

### Evaluation

A part of the perpendicular magnetic recording medium which includes a transferred magnetic signal having a signal line thickness of 60 nm were evaluated in terms of signal quality level (signal output and variation of signal line thickness). The signal line thickness was measured by use of a magnetic force microscope, e.g., Model Nanoscope IV manufactured by Nihon Veeco KK.

### (Measurement of Magnetic Anisotropy Energy of Magnetic Layer)

A sample of the master carrier of each example (a sample layer comprising the soft magnetic under layer (SUL) and the magnetic layer of the master disc) was formed on a 2.5 inch glass disc substrate under the same condition as Example I. The sample layer was peeled apart from the glass disc substrate and cut to a 6 mm x 8 mm sample film. Magnetic anisotropy energy of the sample film was measured by use of an anisotropy torque meter, e.g., Model TRT-2 manufactured by Toei Industry Co., Ltd.

### (Measurement of Saturation Magnetization and Nucleation Magnetic Field of Magnetic Layer)

Values of saturation magnetization (emu) and nucleation magnetic field (Hn) of the sample film were found from a magnetization curve of the sample film which was determined by use of a vibrating sample magnetometer, e.g., Model VSM-C7 manufactured by Toei Industry Co., Ltd. Further, the thickness of the sample film (the soft magnetic under layer and the magnetic layer) was measured by use of an atom force microscope, e.g., Model Dimension 5000 manufactured by Nihon Veeco KK. Volume saturation magnetization (emu/cc) was found by dividing the value of saturation magnetization by the volume of the sample film.

### (Transferred Signal Quality Level)

Reproduced output of signals were detected from all sectors of the perpendicular magnetic recording medium to which the signals were transferred according to the line patterns of the master carrier by use of an evaluation device provided with a giant magnetoresistive (GMR) head having a read width of 100 nm e.g., Model LS-90 manufactured by Kyododenshi System Co., Ltd. Radial positions at which signal lines have desired thicknesses of 60 nm and 150 nm were found to work out a total average S/N ratio (PS/N) for 150 sectors and a reference S/N ratio (HS/N), respectively. The master carrier was rated as excellent (Ⓞ) in signal quality level when having a percentage ratio S/N ratio (HS/N) higher than 80 %, as good (o) when having a percentage ratio S/N ratio (HS/N) between 60 % and 80 %, as lowish (△) when having a percentage ratio S/N ratio (HS/N) between 40% and 60%, or as low (X) when having a percentage ratio S/N ratio (HS/N) lower than 40 %.

### (Variations of Signal Line Thickness)

In concurrence with the rating of percentage S/N ratio, an evaluation of variations of signal line thickness was conducted. A standard σ of line thickness was worked out based on reproduced output for 150 sectors. The master carrier was rated as excellent (Ⓞ) when having a 3σ value less than 20 % of line thickness, as good (○) when having a 3σ value between 20 % and 25 % of line thickness, as lowish (△) when having a 3σ value between 25 % and 30%, or as low (×) when having a 3σ value greater than 30 % of line thickness.

The result of evaluation of the master carriers of examples E-I to E-V and comparative examples CE-I to CE-III is shown in Table I.

### Examples E-VI to E-X and Comparative Examples CE-IV to CE-VI

Master carriers of examples E-VI to E-X and comparative examples CE-IV to CE-VI were prepared by the same way as Examples E-I to E-V and CE-I to CE-III, respectively, except that a part of the perpendicular magnetic recording medium which includes a transferred magnetic signal having a signal line thickness of 70 nm were evaluated in terms of signal quality level (signal output and variation of signal line thickness) in the same manner as described above. The result of evaluation of the master carriers of examples E-VI to E-X and comparative examples CE-IV to CE-VI is shown in Table II.

### Examples E-XI to E-XV and Comparative Examples CE-VII to CE-IX

Master carriers of examples E-XI to E-XV and comparative examples CE-VII to CE-IX were prepared by the same way as Examples E-I to E-V and CE-I to CE-III, respectively, except that a part of the perpendicular magnetic recording medium which includes a transferred magnetic signal having a signal line thickness of 80 nm were evaluated in terms of signal quality level (signal output and variation of signal line thickness) in the same manner as described above. The result of evaluation of the master carriers of examples E-XI to E-XV and comparative examples CE-VII to CE-IX is shown in Table III.

### Examples E-XVI to E-XX and Comparative Examples CE-X to CE-XII

Master carriers of examples E-XVI to E-XX and comparative examples CE-X to CE-XII were prepared by the same way as Examples E-I to E-V and CE-I to CE-III, respectively, except that a part of the perpendicular magnetic recording medium which includes a transferred magnetic signal having a signal line thickness of 90 nm were evaluated in terms of signal quality level (signal output and variation of signal line thickness) in the same manner as described above. The result of evaluation of the master carriers of examples E-XVI to E-XX and comparative examples CE-X to CE-XII is shown in Table IV.

### Examples E-XXI to E-XXV and Comparative Examples CE-XIII to CE-XV

Master carriers of examples E-XXI to E-XXV and comparative examples CE-XIII to CE-XV were prepared by the same way as Examples E-I to E-V and CE-I to CE-III, respectively, except that a part of the perpendicular magnetic recording medium which includes a transferred magnetic signal having a signal line thickness of 100 nm were evaluated in terms of signal quality level (signal output and variation of signal line thickness) in the same manner as described above. The result of evaluation of the master carriers of examples E-XXI to E-XXV and comparative examples CE-XIII to CE-XV is shown in Table V.

### Examples E-XXVI to E-XXX and Comparative Examples CE-XVI to CE-XVIII

Master carriers of examples E-XXVI to E-XXX and comparative examples CE-XVI to CE-XVIII were prepared by the same way as Examples E-I to E-V and CE-I to CE-III, respectively, except that a part of the perpendicular magnetic recording medium which includes a transferred magnetic signal having a signal line thickness of 120 nm were evaluated in terms of signal quality level (signal output and variation of signal line thickness) in the same manner as described above. The result of evaluation of the master carriers of examples E-XXI to E-XXV and comparative examples CE-XIII to CE-XV is shown in Table VI.

**Table I**

| | Magnetic anisotropy energy (erg/cm³) | Saturation magnetization (emu/cc) | Under layer | Signal output | | Variation of signal line thickness | | Overall evaluation |
|---|---|---|---|---|---|---|---|---|
| | | | | (%) | Grade | (%) | Grade | |
| E-I | 8.6 x 10⁶ | 1,250 | Present | 85 | Ⓞ | 17 | Ⓞ | Ⓞ |
| E-II | 1.4 x 10⁷ | 1,120 | Present | 80 | Ⓞ | 19 | Ⓞ | Ⓞ |
| E-III | 5.2 x 10⁶ | 1,260 | Present | 83 | ○ | 22 | ○ | ○ |
| E-IV | 7.9 x 10⁶ | 930 | Present | 72 | ○ | 21 | ○ | ○ |
| E-V | 5.8 x 10⁶ | 540 | Present | 43 | ○ | 24 | ○ | ○ |
| CE-I | 3.2 x 10⁶ | 1,300 | Present | 56 | △ | 27 | △ | △ |
| CE-II | 1.5 x 10⁶ | 1,400 | None | 37 | △ | 29 | △ | × |
| CE-III | 4.8 x 10³ | 1,800 | None | 55 | × | 33 | × | × |

**Table II**

| | Magnetic anisotropy energy (erg/cm³) | Saturation magnetization (emu/cc) | Under Layer | Signal output | | Variation of signal line thickness | | Overall evaluation |
|---|---|---|---|---|---|---|---|---|
| | | | | (%) | Grade | (%) | Grade | |
| E-VI | 8.6 x 10⁶ | 1,250 | Present | 86 | Ⓞ | 17 | Ⓞ | Ⓞ |
| E-VII | 1.4 x 10⁷ | 1,120 | Present | 81 | Ⓞ | 19 | Ⓞ | Ⓞ |
| E-VIII | 5.2 x 10⁶ | 1,260 | Present | 85 | Ⓞ | 22 | ○ | ○ |
| E-IX | 7.9 x 10⁶ | 930 | Present | 73 | ○ | 21 | Ⓞ | ○ |
| E-X | 5.8 x 10⁶ | 540 | Present | 45 | △ | 24 | ○ | ○ |
| CE-IV | 3.2 x 10⁶ | 1,300 | Present | 58 | △ | 27 | △ | △ |
| CE-V | 1.5 x 10⁶ | 1,400 | None | 46 | △ | 29 | △ | △ |
| CE-VI | 4.8 x 10³ | 1,800 | None | 59 | △ | 33 | △ | △ |

**Table III**

| | Magnetic anisotropy energy (erg/cm³) | Saturation magnetization (emu/cc) | Under Layer | Signal output | | Variation of signal line thickness | | Overall evaluation |
|---|---|---|---|---|---|---|---|---|
| | | | | (%) | Grade | (%) | Grade | |
| E-XI | 8.6 x 10⁶ | 1,250 | Present | 88 | Ⓞ | 16 | Ⓞ | Ⓞ |
| E-XII | 1.4 x 10⁷ | 1,120 | Present | 84 | Ⓞ | 17 | Ⓞ | Ⓞ |
| E-XIII | 5.2 x 10⁶ | 1,260 | Present | 87 | Ⓞ | 19 | Ⓞ | Ⓞ |
| E-XIV | 7.9 x 10⁶ | 930 | Present | 75 | ○ | 18 | Ⓞ | ○ |
| E-XV | 5.8 x 10⁶ | 540 | Present | 84 | △ | 21 | ○ | ○ |
| CE-VII | 3.2 x 10⁶ | 1,300 | Present | 64 | ○ | 25 | △ | ○ |
| CE-VIII | 1.5 x 10⁶ | 1,400 | None | 60 | ○ | 27 | △ | ○ |
| CE-IX | 4.8 x 10³ | 1,800 | None | 67 | ○ | 27 | △ | ○ |

**Table IV**

| | Magnetic anisotropy energy (erg/cm³) | Saturation magnetization (emu/cc) | Under layer | Signal output | | Variation of signal line thickness | | Overall evaluation |
|---|---|---|---|---|---|---|---|---|
| | | | | (%) | Grade | (%) | Grade | |
| E-XVI | 8.6 x 10⁶ | 1,250 | Present | 89 | Ⓞ | 15 | Ⓞ | Ⓞ |
| E-XVII | 1.4 x 10⁷ | 1,120 | Present | 85 | Ⓞ | 16 | Ⓞ | Ⓞ |
| E-XVIII | 5.2 x 10⁶ | 1,260 | Present | 89 | Ⓞ | 18 | Ⓞ | Ⓞ |
| E-XIX | 7.9 x 10⁶ | 930 | Present | 77 | ○ | 18 | Ⓞ | ○ |
| E-XX | 5.8 x 10⁶ | 540 | Present | 51 | △ | 21 | ○ | ○ |
| CE-X | 3.2 x 10⁶ | 1,300 | Present | 71 | ○ | 24 | ○ | ○ |
| CE-XI | 1.5 x 10⁶ | 1,400 | None | 68 | ○ | 26 | △ | ○ |
| CE-XII | 4.8 x 10³ | 1,800 | None | 76 | ○ | 25 | △ | ○ |

**Table V**

| | Magnetic anisotropy energy (erg/cm³) | Saturation magnetization (emu/cc) | Under Layer | Signal output | | Variation of signal line thickness | | Overall evaluation |
|---|---|---|---|---|---|---|---|---|
| | | | | (%) | Grade | (%) | Grade | |
| E-XXI | 8.6 x 10⁶ | 1,250 | Present | 90 | Ⓞ | 14 | Ⓞ | Ⓞ |
| E-XXII | 1.4 x 10⁷ | 1,120 | Present | 87 | Ⓞ | 15 | Ⓞ | Ⓞ |
| E-XXIII | 5.2 x 10⁶ | 1,260 | Present | 90 | Ⓞ | 17 | Ⓞ | Ⓞ |
| E-XXIV | 7.9 x 10⁶ | 930 | Present | 79 | ○ | 17 | Ⓞ | ○ |
| E-XXV | 5.8 x 10⁶ | 540 | Present | 53 | △ | 20 | ○ | ○ |
| CE-XIII | 3.2 x 10⁶ | 1,300 | Present | 77 | ○ | 22 | ○ | ○ |
| CE-XIV | 1.5 x 10⁶ | 1,400 | None | 79 | ○ | 23 | ○ | ○ |
| CE-XV | 4.8 x 10³ | 1,800 | None | 84 | Ⓞ | 22 | ○ | ○ |

**Table VI**

| | Magnetic anisotropy energy (erg/cm³) | Saturation magnetization (emu/cc) | Under Layer | Signal output | | Variation of signal line thickness | | Overall evaluation |
|---|---|---|---|---|---|---|---|---|
| | | | | (%) | Grade | (%) | Grade | |
| E-XXVI | 8.6 x 10⁶ | 1,250 | Present | 90 | Ⓞ | 14 | Ⓞ | Ⓞ |
| E-XXVII | 1.4 x 10⁷ | 1,120 | Present | 89 | Ⓞ | 14 | Ⓞ | Ⓞ |
| E-XXVII | 5.2 x 10⁶ | 1,260 | Present | 91 | Ⓞ | 16 | Ⓞ | Ⓞ |
| E-XXIX | 7.9 x 10⁶ | 930 | Present | 81 | Ⓞ | 17 | Ⓞ | Ⓞ |
| E-XXX | 5.8 x 10⁶ | 540 | Present | 58 | △ | 18 | Ⓞ | ○ |
| CE-XVI | 3.2 x 10⁶ | 1,300 | Present | 82 | Ⓞ | 19 | Ⓞ | Ⓞ |
| CE-XVII | 1.5 x 10⁶ | 1,400 | None | 84 | Ⓞ | 19 | Ⓞ | Ⓞ |
| CE-XVIII | 4.8 x 10³ | 1,800 | None | 90 | Ⓞ | 18 | Ⓞ | Ⓞ |

The master carriers of Examples E-I to E-XXX are demonstratively ascertained to be superior in signal output and variation of signal line thickness.

## Claims

1. A magnetic transfer master substrate (20) carrying magnetic information which is transferred to a perpendicular magnetic recording medium (10) by applying a magnetic field to the magnetic transfer master substrate (20) in intimate contact with the perpendicular magnetic recording medium (10), said magnetic transfer master substrate (20) comprising:
a transfer surface area with a magnetic layer (204, 214) formed thereon in a pattern according to magnetic information to be transferred to the perpendicular magnetic recording medium; and
a recessed non-transfer surface area laying below said transfer surface area;
wherein said magnetic layer (204, 214) has a perpendicular magnetic anisotropy of a magnetic anisotropy energy higher than 4 x 10⁶ erg/cm³.

2. The magnetic transfer master substrate as defined in claim 1, wherein said magnetic layer (204, 214) has a magnetic anisotropy energy higher in a range of from 5 x 10⁶ erg/cm³ to 1 x 10⁸ erg/cm³_{.}

3. The magnetic transfer master substrate as defined in claim 1 or 2, wherein said magnetic layer (204, 214) has a magnetic anisotropy energy higher in a range of from 7 x 10⁶ erg/cm³ to 3 x 10⁷ erg/cm³.

4. The magnetic transfer master substrate as defined in one of the preceding claims 1 to 3, wherein said magnetic layer (204, 214) has a saturation magnetization higher than 600 emu/cc.

5. The magnetic transfer master substrate as defined in one of the preceding claims 1 to 4, further comprising an under layer for adjusting an orientation of perpendicular magnetization of said magnetic layer, wherein said under layer is formed under said magnetic layer.

6. The magnetic transfer master substrate as defined in claim 5, wherein said under layer has a thickness less than 20 nm.

7. The magnetic transfer master substrate as defined in one of the preceding claims 1 to 6, wherein said magnetic layer comprises a CoPt layer.

8. A magnetic transfer method for transferring magnetic information of a magnetic transfer master substrate 20 carrying magnetic information to a perpendicular magnetic recording medium 10; said magnetic transfer method comprising the steps of:
initially magnetizing said perpendicular magnetic recording medium (10) in a perpendicular direction;
putting said perpendicular magnetic recording medium (10) after said initial magnetization and said magnetic transfer master substrate (20) in intimate contact with each other; and
applying a perpendicular magnetic field in a direction opposite to the direction of said initial magnetization to said magnetic transfer master substrate (20) in intimate contact with said perpendicular magnetic recording medium (10);
wherein said magnetic transfer master substrate (20) comprises a transfer surface area with a magnetic layer (204, 214) formed thereon in a pattern according to magnetic information to be transferred to the perpendicular magnetic recording medium (10), and a recessed non-transfer surface area laying below said transfer surface area; and
wherein said magnetic layer has a perpendicular magnetic anisotropy of a magnetic anisotropy energy higher than 4 x 10⁶ erg/cm³.

9. The magnetic transfer master method as defined in claim 8, wherein said magnetic layer (204, 214) has a magnetic anisotropy energy higher in a range of from 5 x 10⁶ erg/cm³ to 1 x 10⁸ erg/cm³.

10. The magnetic transfer master method as defined in claim 8 or 9, wherein said magnetic layer (204, 214) has a magnetic anisotropy energy higher in a range of from 7 x 10⁶ erg/cm³ to 3 x 10⁷ erg/cm³.

11. The magnetic transfer master method as defined in one of the preceding claims 8 to 10, wherein said magnetic layer (204, 214) has a saturation magnetization higher than 600 emu/cc.

12. The magnetic transfer master method as defined in one of the preceding claims 8 to 11, further comprising an under layer for adjusting an orientation of perpendicular magnetization of said magnetic layer, wherein said under layer is formed under said magnetic layer.

13. The magnetic transfer master method as defined in claim 12, wherein said under layer has a thickness less than 20 nm.

14. The magnetic transfer master method as defined in one of the preceding claims 8 to 13, wherein said magnetic layer comprises a CoPt layer.
